# EUROPEAN PATENT SPECIFICATION

(11) **EP 2 783 888 B1**
(45) Date of publication and mention of the grant of the patent: **02.11.2016**
(21) Application number: 13161076.8
(22) Date of filing: 26.03.2013
(51) Int. Cl.: B60J 1/20, B60J 7/00, B60R 5/04

(54) **Rollo assembly**
Rolloanordnung
Ensemble store à enrouleur

(43) Date of publication of application: 01.10.2014
(73) Proprietor: Inalfa Roof Systems Group B.V., 5804 AB Venray (NL)
(72) Inventor: CAMPS, Theodorus Wilhelmus, 5932 XJ TEGELEN (NL)
(74) Representative: De Vries & Metman

(56) References cited:
- EP-A1- 1 211 110
- EP-A2- 1 803 600
- DE-A1- 10 337 658

## Description

The invention relates to a rollo assembly, comprising a winding shaft defining an axis of rotation and a flexible rollo screen of which a first end is attached to the winding shaft, such that the rollo screen by an appropriate rotation of the winding shaft around its axis of rotation may be wound on or off the winding shaft and wherein the part of the rollo screen wound off from the winding shaft extends along a certain path.

Such a rollo assembly is known from EP 1211110 A.

The path along which the part of the rollo screen wound off from the winding shaft extends depends from the amount of rollo screen wound off from the winding shaft. Such a path extends tangentially starting from a circumferential position of the winding shaft which moves closer to the axis of rotation of the winding shaft with an increase of the amount of rollo screen wound off from the winding shaft, leading to a corresponding shift of said path.

Such a shift, however, of the path along which the rollo screen extends causes problems in some applications of the rollo assembly. For example, when the rollo assembly is applied to a vehicle for cooperation with an open roof construction, such a shift would lead to a varying distance between the wound off part of the rollo screen and a stationary headliner (or a side finisher thereof). To avoid such a varying distance, it is known to use a transverse guide extending at some distance from the winding shaft across the rollo screen (generally in parallel to the winding shaft). The position of this guide is such, that the part of the rollo screen wound off from the winding shaft always will engage said guide irrespective the amount of rollo screen wound off from the winding shaft. As a result the section of the path of the rollo screen starting at the guide and extending in a direction away from the winding shaft always will have the same position.

Although such a guide provides a solution for the above mentioned problems, it may lead to another problem. When using specific materials for the rollo screen, the guide may cause markings on the rollo screen. Especially when the rollo screen remains in a wound on position for a long time, the pressure of the guide applied to the rollo screen may cause markings which initially may be invisible, for example when the guide is hidden behind another part such as a headliner of a vehicle, but which become visible when the rollo screen is wound off from the winding shaft.

It is an object of the present invention to provide an improved rollo assembly of the type referred to above.

Thus, in accordance with the present invention a rollo assembly is provided in which the winding shaft is movable in a direction perpendicularly to its axis of rotation in such a manner that the part of the rollo screen wound off from the winding shaft always extends substantially along the same path independently from the amount of rollo screen wound off from the winding shaft.

The invention is based on the idea that the shift of the circumferential position of the winding shaft (starting from which the path of the rollo screen extends) towards (or away from) the axis of rotation of the winding shaft (as caused by winding off or on, respectively, the rollo screen) may be compensated by a corresponding shift of the winding shaft (thus its axis of rotation).

In one embodiment of the rollo assembly according to the present invention the direction in which the winding shaft is movable, extends substantially perpendicularly to the direction of the path along which the part of the rollo screen wound off from the winding shaft extends. Generally this means that the overall location of said circumferential position of the winding shaft is maintained. The indication "overall location" intends to express a location relative to a surrounding construction which itself may be movable or not (for example a vehicle).

It is noted however, that the movement of the winding shaft also may occur in a different direction (not perpendicularly to the direction of said path), such that, although said circumferential position of the winding shaft again is maintained in the plane of said path, it experiences a shift in said plane (or in other words, the part of the rollo screen wound off from the winding shaft is maintained at the same level but said circumferential position will shift in said level).

Further it should be noted that the indication "direction of the path" does not necessarily mean that said path extends in a straight manner. It is also possible that such a path is (partly) curved and in such a situation said direction may be defined as an average direction.

In another embodiment the rollo assembly comprises stationary pressure means engaging the rollo screen substantially at the position where it starts to be wound off from the winding shaft, wherein the winding shaft is spring loaded towards said stationary pressure means.

Such stationary pressure means assure that said position (corresponding to the circumferential position of the winding shaft referred to previously) is maintained at the same level as explained above.

It is noted that "stationary pressure means" tries to express that the location where said pressure means engage the rollo screen is kept at a stationary position, although the pressure means may be movable in some manner (as will be explained below with respect to a specific embodiment).

When said stationary pressure means are located near to the opposite transverse edges of the rollo screen, it may be avoided effectively that said pressure means cause markings on the part of the rollo screen which are visible for a user (generally the transverse edges of the rollo screen will be guided in lateral guides such that any markings near said transverse edges will be hidden from sight by such lateral guides).

It is possible that the stationary pressure means are rollers rotatable around stationary axes. But also the use of other pressure means is conceivable, such as slide shoes made of a low friction material. The choice will depend, among others, from the material of the rollo screen.

In one embodiment of the rollo assembly the winding shaft is spring loaded by spring members engaging opposite outer ends of the winding shaft. Such spring members may come in many varieties, such as compression springs or tension springs.

The winding shaft, for defining the direction in which it is movable, may comprise two opposite outer ends cooperating with stationary guides. Such guides may extend in a straight line, but it also is possible that these guides extend in a curved manner.

As an alternative to such guides, it is possible that the winding shaft, for defining the direction in which it is movable, comprises two opposite outer ends mounted on two pivot arms. As a result the winding shaft will move along part of a circle. This, however, will not cause problems because the total distance over which the winding shaft will move, will be relatively small (generally not more than a few centimetres).

In another embodiment of the rollo assembly according to the present invention the winding shaft at at least one of its ends is provided with a spiral shaped guide slot and wherein the rollo assembly further comprises a stationary guide pin engaging said guide slot, wherein the shape of the spiral shaped guide slot substantially corresponds with the shape of the part of the rollo screen wound on the winding shaft and wherein the winding shaft comprises two opposite outer ends cooperating with stationary guides.

During rotation of the winding shaft the stationary guide pin will travel in the spiral shaped guide and thus will cause the (outer ends of the) winding shaft to move in the stationary guides.

In yet another embodiment the rollo assembly comprises a driving member for moving the winding shaft in said direction perpendicularly to its axis of rotation, a sensor means for generating a signal representative for the amount of rollo screen wound off from the winding shaft and control means for receiving said signal and for, based upon said signal, controlling the driving member.

For example the driving member may comprise at least one linear actuator, and preferably two linear actuators engaging opposite outer ends of the winding shaft.

In another embodiment the sensor means may be adapted for sensing the rotation of the winding shaft around the axis of rotation.

The rollo assembly according to the present invention may be used both in case the winding shaft, and its axis of rotation, extend along a straight or curved line; further its use may extend both to rollo screens which are operated manually or by a driving device, such as an electric motor. The winding shaft may be spring loaded for winding thereon the rollo screen.

Hereinafter the invention will be elucidated while referring to the drawing, in which:
Figure 1 shows a state of the art rollo assembly in two different positions, both in a perspective view and in a side elevational view;
Figure 2 shows a first embodiment of the rollo assembly according to the invention in two different positions, both in a perspective view and in a side elevational view;
Figure 3 shows a second embodiment of the rollo assembly according to the invention in two different positions, both in a perspective view and in a side elevational view;
Figure 4 shows a third embodiment of the rollo assembly according to the invention in two different positions in a side elevational view, and
Figure 5 schematically shows a fourth embodiment of the rollo assembly according to the invention in two different positions in a side elevational view.

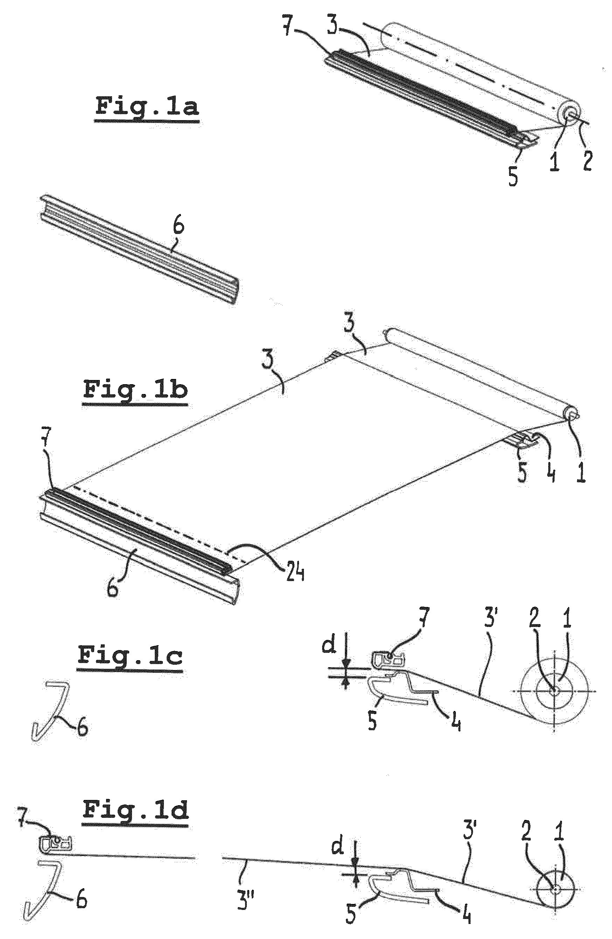

Firstly referring to figure 1, a state of the art rollo assembly comprises a winding shaft 1 defining an axis of rotation 2 and a flexible rollo screen 3 of which a first end is attached to the winding shaft, such that the rollo screen by an appropriate rotation of the winding shaft around its axis of rotation may be wound on or off the winding shaft. The part of the rollo screen 3 wound off from the winding shaft 2 extends along a certain path which in figures 1c and 1d best may be seen as defined by the parts 3' and 3" of the rollo screen 3 wound off from the winding shaft 1.

For assuring that the part of the path corresponding with rollo screen part 3" will maintain its position, the state of the art uses a stationary transverse guide 4 supporting the rollo screen. As a result the rollo screen part 3" always will have the same distance d with respect to (a side finisher of) a headliner 5 (which may be part of a vehicle, for example, of which further another part 6 of the headliner is illustrated), for example in a position in which the rollo screen 3 is wound maximally onto the winding shaft 1 (figures 1a and 1c) and a position in which the rollo screen 3 is wound off maximally from the winding shaft 1 (figures 1b and 1d).

Such a transverse guide 4, however, may cause markings on the rollo screen 3, for example in the situation shown in figure 1a, which markings 24 become visible in a situation as illustrated in figure 1b.

Finally figure 1 shows a pull beam 7 attached to a free edge of the rollo screen 3, as is known per se.

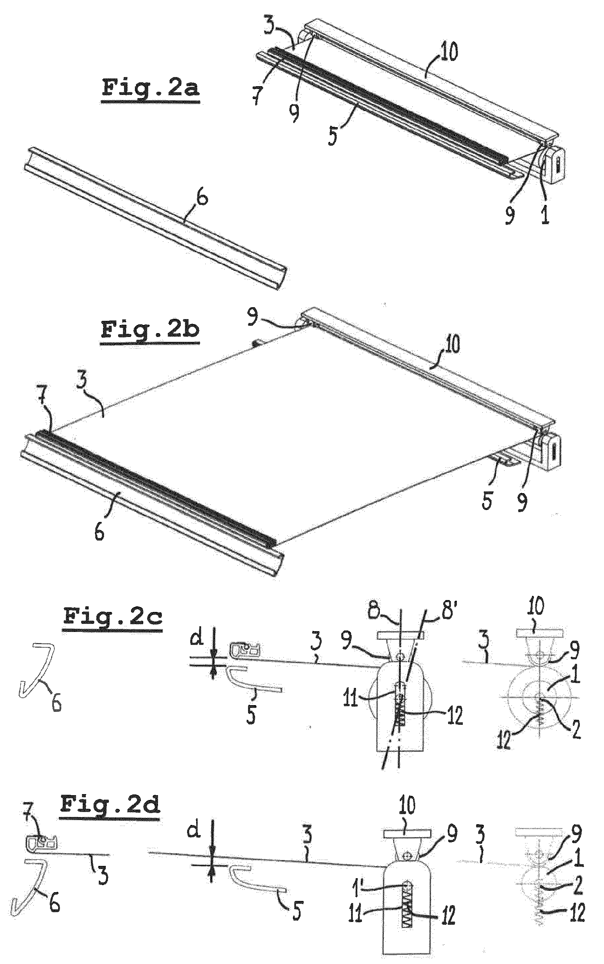

In figure 2 a first embodiment of a rollo assembly according to the invention is illustrated in positions corresponding with figure 1. As will be explained below, the winding shaft (best visible in right parts of figures 2c and 2d in which a guide to be described later has not been shown) is movable in a direction perpendicularly to its axis of rotation 2 in such a manner that the part of the rollo screen 3 wound off from the winding shaft 1 always extends substantially along the same path independently from the amount of rollo screen wound off from the winding shaft.

The direction in which the winding shaft 1 is movable (in figure 2c indicated by line 8), may extends substantially perpendicularly to the direction of the path along which the part of the rollo screen wound off from the winding shaft extends (represented by rollo screen part 3 in figure 2c), but also may extend at a different angle with respect thereto (indicated schematically in figure 2c by a different orientation of line 8').

The rollo assembly comprises two rollers 9 mounted for a rotation around stationary axes in brackets 10 and engaging the rollo screen 3 substantially at the position where the rollo screen starts to be wound off from the winding shaft 1. Said rollers 9 are located near to the opposite transverse edges of the rollo screen 3 and in the present embodiment the brackets 10 are combined into a single part.

The winding shaft 1, for defining the direction in which it is movable, comprises two opposite outer ends 1' (indicated in figure 2d only) cooperating with stationary guides 11. Further the winding shaft 1 is spring loaded by spring members 12 engaging said opposite outer ends 1' of the winding shaft 1 for a movement towards the rollers 9.

When comparing figures 2c and 2d it becomes clear that during unwinding the rollo screen 3 from the winding shaft 1, the winding shaft moves along the guides 11 such that the distance between its axis of rotation 2 and the position where the rollo screen 3 starts to be wound off from the winding shaft 1 (here substantially the position where the rollers 9 engage the rollo screen) decreases. As a result the distance d (figures 2c and 2d) between the rollo screen 3 and a stationary part (headliner) 5 is kept constant without the use of a separate guide.

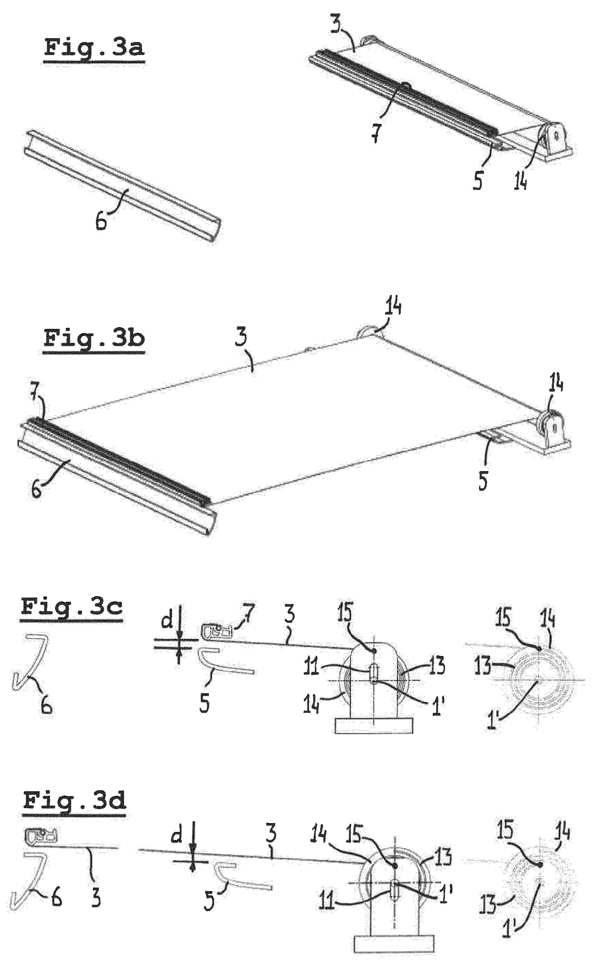

In figure 3 an embodiment of the rollo assembly according to the invention is illustrated in which the winding shaft 1 at its opposite ends is provided with a spiral shaped guide slot 13 defined in a disc member 14 attached to the winding shaft 1 for a rotation therewith. The rollo assembly further comprises a stationary guide pin 15 (illustrated schematically in figures 3c and 3d; in reality this guide pin 15 will not be visible in these views) engaging said guide slot 13. The shape of the spiral shaped guide slot 13 will substantially correspond with the shape of the part of the rollo screen 3 wound on the winding shaft 1. The winding shaft 1, as before, comprises two opposite outer ends 1' cooperating with stationary guides 11.

When the winding shaft 1 rotates, the guide pin 15 (which generally will be attached to a member in which guide 11 is defined) travels in the spiral shaped guide slot 13 and causes a movement of the winding shaft 1 (its ends 1') along the guides 11. As a result the distance d (figures 3c and 3d) between the rollo screen 3 and a stationary part (headliner) 5 is kept constant without the use of a separate guide.

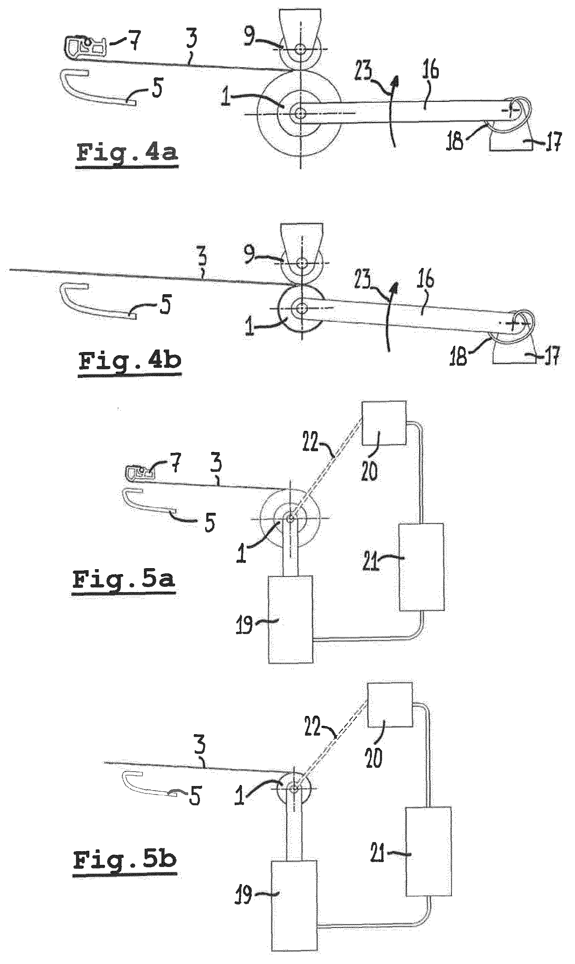

In figure 4 an embodiment of the rollo assembly according to the present invention is illustrated in which the winding shaft 1, for defining the direction in which it is movable, comprises two opposite outer ends mounted on two pivot arms 16 mounted for a rotation to stationary mounts 17. These pivot arms 16 are spring loaded by a spring 18 for moving the winding shaft towards rollers 9 (according to arrow 23).

Figure 5 schematically shows an embodiment of the rollo assembly in which a driving member 19 for moving the winding shaft 1 in said direction perpendicularly to its axis of rotation is provided. A sensor means 20 for generating a signal representative for the amount of rollo screen wound off from the winding shaft 1 is connected with a control means 21 for receiving said signal and for, based upon said signal, controlling the driving member 19. The driving member 19 may comprise at least one linear actuator, and preferably two linear actuators engaging opposite outer ends of the winding shaft 1 (for example driving screws engageable by driving nuts attached to said outer ends of the driving shaft 1). However, alternative driving members are conceivable too, for example pivot arms 16 as illustrated in figure 4 (then the rollers 9 would not be used, but the rotation of the pivot arms 16 would be controlled).

The sensor means 20, for example, may be adapted for sensing the rotation of the winding shaft 1 around the axis of rotation (as illustrated schematically by sensing line 22).

The invention is not limited to the embodiments described before which may be varied widely within the scope of the invention as defined by the appending claims. For example it is possible in general that the rotation of the driving shaft by means of a mechanical transmission is connected to a drive member for the driving shaft movement.

## Claims

1. Rollo assembly, comprising a winding shaft (1) defining an axis of rotation (2) and a flexible rollo screen (3) of which a first end is attached to the winding shaft, such that the rollo screen by an appropriate rotation of the winding shaft around its axis of rotation may be wound on or off the winding shaft and wherein the part of the rollo screen wound off from the winding shaft extends along a certain path, **characterized in that** the winding shaft (1) is movable in a direction perpendicularly to its axis of rotation (2) in such a manner that the part of the rollo screen (3) wound off from the winding shaft always extends substantially along the same path independently from the amount of rollo screen wound off from the winding shaft.

2. Rollo assembly according to claim 1, wherein the direction in which the winding shaft (1) is movable, extends substantially perpendicularly to the direction of the path along which the part of the rollo screen (3) wound off from the winding shaft extends.

3. Rollo assembly according to claim 1 or 2, comprising stationary pressure means (9) engaging the rollo screen (3) substantially at the position where it starts to be wound off from the winding shaft (1), and wherein the winding shaft is spring loaded (12) towards said stationary pressure means.

4. Rollo assembly according to claim 3, wherein said stationary pressure means (9) are located near to the opposite transverse edges of the rollo screen (3).

5. Rollo assembly according to claim 3 or 4, wherein the stationary pressure means are rollers (9) rotatable around stationary axes.

6. Rollo assembly according to any of the claims 3-5, wherein the winding shaft (1) is spring loaded by spring members (12) engaging opposite outer ends of the winding shaft.

7. Rollo assembly according to any of the previous claims, wherein the winding shaft (1), for defining the direction in which it is movable, comprises two opposite outer ends cooperating with stationary guides (11).

8. Rollo assembly according to any of the claims 1-6, wherein the winding shaft (1), for defining the direction in which it is movable, comprises two opposite outer ends mounted on two pivot arms (16).

9. Rollo assembly according to claim 1 or 2, wherein the winding shaft (1) at at least one of its ends is provided with a spiral shaped guide slot (13) and wherein the rollo assembly further comprises a stationary guide pin (15) engaging said guide slot, wherein the shape of the spiral shaped guide slot (13) substantially corresponds with the shape of the part of the rollo screen (3) wound on the winding shaft (1) and wherein the winding shaft comprises two opposite outer ends cooperating with stationary guides (11).

10. Rollo assembly according to claim 1 or 2, comprising a driving member (19) for moving the winding shaft (1) in said direction perpendicularly to its axis of rotation (2), a sensor means (20,22) for generating a signal representative for the amount of rollo screen (3) wound off from the winding shaft (1) and control means (21) for receiving said signal and for, based upon said signal, controlling the driving member (19).

11. Rollo assembly according to claim 10, wherein the driving member (19) comprises at least one linear actuator engaging one outer end of the winding shaft, and preferably two linear actuators engaging opposite outer ends of the winding shaft (1).

12. Rollo assembly according to claim 10 or 11, wherein the sensor means (20,22) is adapted for sensing the rotation of the winding shaft (1) around the axis of rotation (2).

13. Rollo assembly according to any of the previous claims, wherein the winding shaft (1), and its axis of rotation (2), extend along a straight or curved line.

14. Rollo assembly according to any of the previous claims, wherein the rollo screen (3) is operated manually (6) or by a driving device, such as an electric motor.

15. Rollo assembly according to any of the previous claims, wherein the winding shaft (1) is spring loaded for winding thereon the rollo screen (3).

## Patentansprüche

1. Rollovorrichtung, aufweisend eine Wickelwelle (1), die eine Rotationsachse (2) definiert, und einen flexiblen Rollovorhang (3), von dem ein erstes Ende an der Wickelwelle angebracht ist, so dass der Rollovorhang durch ein geeignetes Drehen der Wickelwelle um ihre Rotationsachse auf die Wickelwelle aufgewickelt oder von dieser abgewickelt werden kann, und wobei der Teil des Rollovorhangs, der von der Wickelwelle abgewickelt ist, sich entlang einem bestimmten Pfad erstreckt, **dadurch gekennzeichnet, dass** die Wickelwelle (1) in einer Richtung senkrecht zu ihrer Rotationsachse (2) derart bewegbar ist, dass der Teil des Rollovorhangs (3), der von der Wickelwelle abgewickelt ist, sich immer im Wesentlichen entlang dem gleichen Pfad erstreckt, unabhängig von der von der Wickelwelle abgewickelten Rollovorhangmenge.

2. Rollovorrichtung gemäß Anspruch 1, wobei die Richtung, in der die Wickelwelle (1) bewegbar ist, sich im Wesentlichen senkrecht zu der Richtung des Pfades erstreckt, entlang welchem sich der Teil des Rollovorhangs (3) erstreckt, der von der Wickelwelle abgewickelt ist.

3. Rollovorrichtung gemäß Anspruch 1 oder 2, aufweisend stationäre Druckmittel (9), die mit dem Rollovorhang (3) im Wesentlichen in einer Position in Eingriff sind, in der dieser anfängt, von der Wickelwelle (1) abgewickelt zu werden, und wobei die Wickelwelle in Richtung der stationären Druckmittel federbelastet (12) ist.

4. Rollovorrichtung gemäß Anspruch 3, wobei die stationären Druckmittel (9) nahe bei den entgegengesetzten Querrändern des Rollovorhangs (3) angeordnet sind.

5. Rollovorrichtung gemäß Anspruch 3 oder 4, wobei die stationären Druckmittel Rollen (9) sind, die um stationäre Achsen drehbar sind.

6. Rollovorrichtung gemäß irgendeinem der Ansprüche 3 bis 5, wobei die Wickelwelle (1) durch Federelemente (12) federbelastet ist, die mit entgegengesetzten äußeren Enden der Wickelwelle in Eingriff sind.

7. Rollovorrichtung gemäß irgendeinem der vorhergehenden Ansprüche, wobei die Wickelwelle (1) zum Definieren der Richtung, in der sie bewegbar ist, zwei entgegengesetzte äußere Enden aufweist, die mit stationären Führungen (11) zusammenwirken.

8. Rollovorrichtung gemäß irgendeinem der Ansprüche 1 bis 6, wobei die Wickelwelle (1) zum Definieren der Richtung, in der sie bewegbar ist, zwei entgegengesetzte äußere Enden aufweist, die an zwei Schwenkarmen (16) montiert sind.

9. Rollovorrichtung gemäß Anspruch 1 oder 2, wobei die Wickelwelle (1) an mindestens einem ihrer Enden mit einem spiralförmigen Führungsschlitz (13) versehen ist, und wobei die Rollovorrichtung ferner einen stationären Führungsstift (15) aufweist, der mit dem Führungsschlitz (13) in Eingriff ist, wobei die Form des spiralförmigen Führungsschlitzes (13) im Wesentlichen mit der Form des Teils des Rollovorhangs (3) korrespondiert, der auf die Wickelwelle (1) aufgewickelt ist, und wobei die Wickelwelle zwei entgegengesetzte äußere Enden aufweist, die mit stationären Führungen (11) zusammenwirken.

10. Rollovorrichtung gemäß Anspruch 1 oder 2, aufweisend ein Antriebselement (19) zum Bewegen der Wickelwelle (1) in der besagten Richtung senkrecht zu ihrer Rotationsachse (2), ein Sensormittel (20, 22) zum Erzeugen eines Signals, das für die Menge an Rollovorhang (3) repräsentativ ist, die von der Wickelwelle (1) abgewickelt ist, und Steuermittel (21) zum Empfangen des besagten Signals und zum Steuern des Antriebselements (19) basierend auf dem besagten Signal.

11. Rollovorrichtung gemäß Anspruch 10, wobei das Antriebselement (19) aufweist: mindestens einen linearen Aktor, der mit einem äußeren Ende der Wickelwelle in Eingriff ist, und vorzugsweise zwei lineare Aktoren, die mit entgegengesetzten äußeren Enden der Wickelwelle (1) in Eingriff sind.

12. Rollovorrichtung gemäß Anspruch 10 oder 11, wobei das Sensormittel (20, 22) zum Erfassen der Rotation der Wickelwelle (1) um die Rotationsachse (2) angepasst ist.

13. Rollovorrichtung gemäß irgendeinem der vorhergehenden Ansprüche, wobei die Wickelwelle (1) und ihre Rotationsachse (2) sich entlang einer geraden oder gekrümmten Linie erstrecken.

14. Rollovorrichtung gemäß irgendeinem der vorhergehenden Ansprüche, wobei der Rollovorhang (3) manuell (6) oder mittels einer Antriebsvorrichtung, zum Beispiel mittels eines Elektromotors betrieben wird.

15. Rollovorrichtung gemäß irgendeinem der vorhergehenden Ansprüche, wobei die Wickelwelle (1) zum darauf Aufwickeln des Rollovorhangs (3) federbelastet ist.

## Revendications

1. Ensemble store à enrouleur comprenant un arbre d'enroulement (1) définissant un axe de rotation (2) et un rideau de store à enrouleur flexible (3) dont une première extrémité est fixée sur l'arbre d'enroulement, de sorte que le rideau de store à enrouleur, grâce à la rotation appropriée de l'arbre d'enroulement autour de son axe de rotation, peut être enroulé ou déroulé de l'arbre d'enroulement et dans lequel la partie du rideau de store à enrouleur déroulée de l'arbre d'enroulement s'étend le long d'une certaine trajectoire, **caractérisé en ce que** l'arbre d'enroulement (1) est mobile dans une direction perpendiculaire à son axe de rotation (2) de sorte que la partie du rideau de store à enrouleur (3) déroulée de l'arbre d'enroulement s'étend toujours sensiblement le long de la même trajectoire indépendamment de la quantité du rideau de store à enrouleur déroulée de l'arbre d'enroulement.

2. Ensemble store à enrouleur selon la revendication 1, dans lequel la direction dans laquelle l'arbre d'enroulement (1) est mobile, s'étend sensiblement perpendiculairement à la direction de la trajectoire le long de laquelle la partie du rideau de store à enrouleur (3) déroulée de l'arbre d'enroulement s'étend.

3. Ensemble store à enrouleur selon la revendication 1 ou 2, comprenant des moyens de pression fixes (9) mettant en prise le rideau de store à enrouleur (3) sensiblement dans la position dans laquelle il commence à être déroulé de l'arbre d'enroulement (1) et dans lequel l'arbre d'enroulement est chargé par ressort (12) vers lesdits moyens de pression fixes.

4. Ensemble store à enrouleur selon la revendication 3, dans lequel lesdits moyen de pression fixes (9) sont positionnés à proximité des bords transversaux opposés du rideau de store à enrouleur (3).

5. Ensemble store à enrouleur selon la revendication 3 ou 4, dans lequel les moyens de pression fixes sont des rouleaux (9) pouvant tourner autour des axes fixes.

6. Ensemble store à enrouleur selon l'une quelconque des revendications 3 à 5, dans lequel l'arbre d'enroulement (1) est chargé par ressort par des éléments de ressort (12) mettant en prise les extrémités externes opposées de l'arbre d'enroulement.

7. Ensemble store à enrouleur selon l'une quelconque des revendications précédentes, dans lequel l'arbre d'enroulement (1) pour définir la direction dans laquelle il est mobile, comprend deux extrémités externes opposées coopérant avec des guides fixes (11).

8. Ensemble store à enrouleur selon l'une quelconque des revendications 1 à 6, dans lequel l'arbre d'enroulement (1), pour définir la direction dans laquelle il est mobile, comprend deux extrémités externes opposées montées sur deux bras de pivot (16).

9. Ensemble store à enrouleur selon la revendication 1 ou 2, dans lequel l'arbre d'enroulement (1) au moins à l'une de ses extrémités, est prévu avec une fente de guidage en forme de spirale (13) et dans lequel l'ensemble store à enrouleur comprend en outre une broche de guidage fixe (15) mettant en prise ladite fente de guidage, dans lequel la forme de la fente de guidage en forme de spirale (13) correspond sensiblement à la forme de la partie du rideau de store à enroulement (3) enroulée sur l'arbre d'enroulement (1) et dans lequel l'arbre d'enroulement comprend deux extrémités externes opposées coopérant avec des guides fixes (11).

10. Ensemble store à enrouleur selon la revendication 1 ou 2, comprenant un élément d'entraînement (19) pour déplacer l'arbre d'enroulement (1) dans ladite direction perpendiculairement à son axe de rotation (2), un moyen de capteur (20, 22) pour générer un signal représentatif de la quantité du rideau de store à enrouleur (3) déroulée de l'arbre d'enroulement (1) et un moyen de commande (21) pour recevoir ledit signal et, en fonction dudit signal, pour commander l'élément d'entraînement (19).

11. Ensemble store à enrouleur selon la revendication 10, dans lequel l'élément d'entraînement (19) comprend au moins un actionneur linéaire mettant en prise une extrémité externe de l'arbre d'enroulement et de préférence deux actionneurs linéaires mettant en prise des extrémités externes de l'arbre d'enroulement (1).

12. Ensemble store à enrouleur selon la revendication 10 ou 11, dans lequel le moyen de capteur (20, 22) est adapté pour détecter la rotation de l'arbre d'enroulement (1) autour de l'axe de rotation (2).

13. Ensemble store à enrouleur selon l'une quelconque des revendications précédentes, dans lequel l'arbre d'enroulement (1) et son axe de rotation (2), s'étendent le long d'une ligne droite ou incurvée.

14. Ensemble store à enrouleur selon l'une quelconque des revendications précédentes, dans lequel le rideau de store à enrouleur (3) est actionné manuellement (6) ou par un dispositif d'entraînement, tel qu'un moteur électrique.

15. Ensemble store à enrouleur selon l'une quelconque des revendications précédentes, dans lequel l'arbre d'enroulement (1) est chargé par ressort pour enrouler sur ce dernier le rideau de store à enrouleur (3).
